# FASCICULE DE BREVET EUROPEEN

(11) **EP 1 456 691 B1**
(45) Date de publication et mention de la délivrance du brevet: **22.09.2010**
(21) Numéro de dépôt: 02804251.3
(22) Date de dépôt: 05.12.2002
(51) Int. Cl.: G01T 1/167

(54) **PROCEDE ET APPAREIL POUR MESURER L ACTIVITE D UN RADIO-ISOTOPE**
VERBESSERUNGEN AN VERFAHREN UND EINRICHTUNGEN ZUR MESSUNG DER AKTIVITÄT EINES RADIOISOTOPS
IMPROVEMENT TO METHODS AND DEVICES FOR MEASURING THE ACTIVITY OF A RADIOISOTOPE

(30) Priorité: 06.12.2001 FR 0115762
(43) Date de publication de la demande: 15.09.2004
(73) Titulaire: LEMER PROTECTION ANTI-X PAR ABREVIATION SOCIETE LEMER PAX, 44470 Carquefou (FR)
(72) Inventeur: LEMER, Pierre-Marie, F-44100 Nantes (FR)
(74) Mandataire: Catherine, Alain
(86) Numéro de dépôt international: PCT/FR2002/004195
(87) Numéro de publication internationale: WO 2003/048807

(56) Documents cités:
- PATENT ABSTRACTS OF JAPAN vol. 1999, no. 05, 31 mai 1999 (1999-05-31) & JP 11 052061 A (ALOKA CO LTD), 26 février 1999 (1999-02-26)

## Description

La présente invention concerne le domaine général des produits ou sources émettant des rayonnements radioactifs. Elle concerne plus précisément un procédé et un appareil pour mesurer l'activité d'un radio-isotope, en particulier mais non exclusivement du type de ceux mis en oeuvre dans le domaine de la médecine nucléaire pour la préparation de solutions injectables radioactives nécessaires à la réalisation de scintigraphies, ou pour la préparation de produits radioactifs utilisés en radiothérapie métabolique dans le cadre du traitement de certains cancers.

On utilise actuellement des appareils appelés « activimètres » ou « calibrateurs de radionucléides », notamment pour mesurer l'activité de sources radioactives émettrices de rayonnements gamma, dans une gamme d'énergie de quelques dizaines de KeV à plusieurs MeV, ou de rayonnements bêta d'énergie supérieure à 1,5 KeV. L'une des principales applications de ce genre d'appareil est le calibrage de doses radio-pharmaceutiques injectées aux - patients en médecine nucléaire, mais ils sont aussi utilisables pour d'autres applications d'activimétrie radio-isotopique, notamment dans les laboratoires industriels ou les centres de recherche.

Ces activimètres sont constitués d'une chambre d'ionisation à gaz, de type puits, dans laquelle est introduit l'isotope à mesurer. Cette chambre délivre un courant proportionnel à l'activité de l'isotope expérimenté ; elle est connectée à une unité électronique/informatique de commande et de traitement qui convertit ce courant en tension, traite le signal et fournit une indication (en curie ou becquerel) de la mesure de l'activité de l'isotope.
La mesure d'activité étant fonction du spectre d'énergie du rayonnement émis par les radionucléides, les activimètres actuellement sur le marché proposent une sélection manuelle des isotopes à mesurer, parmi une liste préenregistrée ou préprogrammée, de manière à affecter à l'électronique de traitement le coefficient d'étalonnage approprié correspondant au radio-isotope en présence, pour obtenir la mesure d'activité adéquate.
La sélection s'effectue soit par des boutons tactiles, soit à partir d'un menu sur une console informatique.
Les isotopes émetteurs gamma les plus couramment utilisés en médecine nucléaire, et donc présélectionnables, sont Tl 201, Tc 99^{m}, Ga 67, In 111, I 123, 1 131, F 18, C 11 ... , tous compris dans la gamme d'énergie de radiations gamma 70 KeV-511 KeV; mais d'autres isotopes (ou gammes d'énergie) peuvent être introduits ou programmés.

Cependant, la nécessité de sélectionner manuellement l'isotope avant le mesurage de son activité entraîne des risques d'erreurs qui conduisent à une mesure erronée de l'activité.

Le document JP 11052061 décrit un procédé permettant la détermination automatique de l'isotope placé dans la chambre d'ionisation. A cet effet, le document propose de mesurer l'énergie et la demi-vie de l'isotope à identifier.

La présente invention propose une autre solution au problème cité ci-dessus qui ne nécessite pas de mesurer la demi-vie.

A cet effet, le procédé d'activimétrie radio-isotopique conforme à la présente invention, consistant à placer le radio-isotope dans une chambre d'ionisation apte à fournir un courant proportionnel à l'activité dudit radio-isotope expérimenté, puis, par des moyens électroniques de traitement du signal, consistant à convertir la valeur du courant en valeur d'activité, en utilisant un coefficient d'étalonnage correspondant au radio-isotope en présence, est caractérisé par le fait qu'il consiste :
- à déterminer le spectre énergétique de la radiation émise par le radio-isotope placé dans la chambre d'ionisation,
- à comparer automatiquement ce spectre d'énergie avec un ensemble de spectres d'énergie de radio-isotopes préenregistrés ou préprogrammés, de manière à identifier le radio-isotope en présence, puis.
- à affecter automatiquement aux moyens électroniques de traitement du signal, le coefficient d'étalonnage correspondant audit radio-isotope en présence, afin d'obtenir la mesure d'activité adéquate.

Selon une autre caractéristique, pour sécuriser le fonctionnement, le procédé conforme à la présente invention consiste, lorsque le spectre mesuré du radio-isotope en cours d'analyse ne correspond pas à l'un quelconque des spectres préenregistrés ou préprogrammés, à activer automatiquement une alarme visuelle et/ou sonore, de manière à ne pouvoir délivrer la valeur d'activité recherchée qu'après une programmation et/ou une sélection manuelle du radio-isotope en présence.

Afin de résoudre le problème exposé ci-dessus, l'invention concerne également un appareil d'activimétrie radio-isotopique, du type comprenant une chambre d'ionisation reliée à des moyens électroniques de commande et de traitement du signal aptes à fournir une indication de l'activité introduite dans ladite chambre en utilisant un coefficient d'étalonnage correspondant au radio-isotope en présence.

Conformément à la présente invention, cet appareil comprend :
- des moyens d'analyse du spectre d'énergie du radio-isotope concerné,
- des moyens pour comparer automatiquement le spectre d'énergie analysé avec un ensemble de spectres préenregistrés ou préprogrammés, de manière à identifier le radio-isotope en présence, et
- des moyens pour affecter automatiquement aux moyens électroniques de traitement du signal, le coefficient d'étalonnage correspondant audit radio-isotope en présence, pour obtenir la mesure d'activité adéquate.

Toujours selon l'invention, les moyens d'analyse du spectre d'énergie du radio-isotope sont constitués d'au moins un détecteur du type à scintillation ou à semi-conducteur, associé(s) à des moyens électroniques et informatiques de traitement du signal, la surface photosensible dudit ou desdits détecteurs étant placée dans le flux du rayonnement primaire émis par le radio-isotope placé dans la chambre d'ionisation.
Le ou les détecteurs correspondants peuvent être associés à des moyens qui permettent de limiter le flux du rayonnement primaire émis par le radio-isotope qui vient frapper sa surface photosensible, de manière à améliorer les conditions d'analyse du spectre du radio-isotope en présence. Ces moyens de limitation de flux peuvent consister en un système du type diaphragme, soit à ouverture variable, soit à ouverture fixe.

Selon une autre particularité, l'appareil conforme à la présente invention comporte une pluralité de détecteurs différents (par leur nature ou par leur équipement d'un diaphragme) de manière à augmenter les possibilités d'identification des radio-isotope analysés, et la diversité des radio-isotopes identifiables dans une gamme d'énergie prédéfinie plus étendue.

Selon une forme de réalisation préférée, le ou les détecteurs correspondants sont placés dans le fond de la chambre d'ionisation ; le support du conteneur de radio-isotopes est alors muni d'un fond au moins en partie radio-transparent, de manière à ce que le flux du rayonnement primaire émis par le radio-isotope ait la possibilité de venir frapper la surface photosensible du ou des détecteurs.

Selon une autre particularité, pour simplifier et sécuriser l'appareillage, on prévoit des moyens d'information ou d'alerte activés dans le cas où le spectre analysé du radio-isotope en présence ne correspond pas à l'un quelconque des spectres préenregistrés ou préprogrammés, ainsi que des moyens de type interface homme-machine pour permettre la sélection manuelle du radio-isotope en présence.

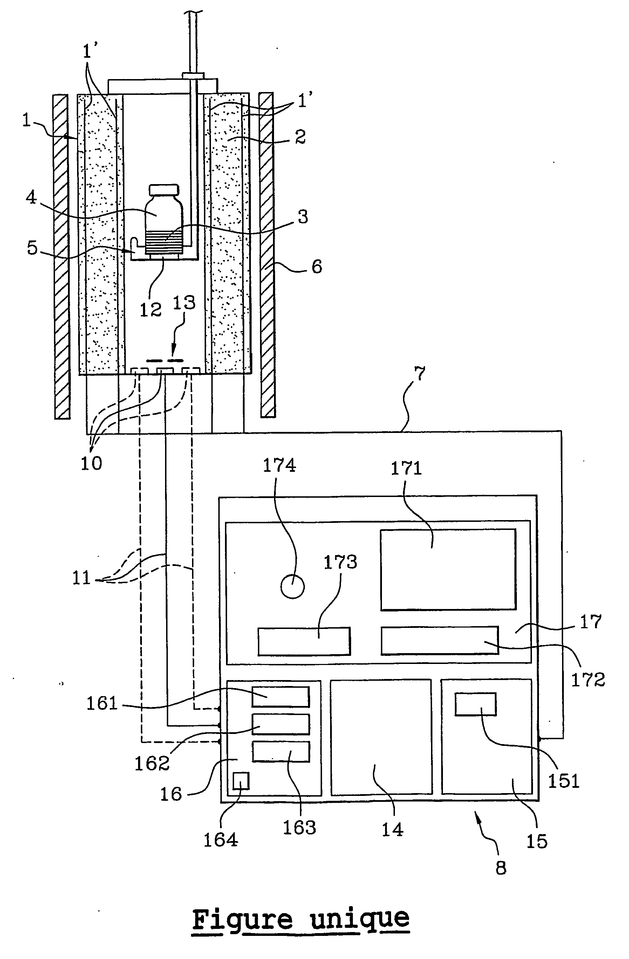

D'autres buts et avantages de la présente invention apparaîtront au cours de la description qui va suivre se rapportant à un mode de réalisation qui n'est donné qu'à titre d'exemple indicatif et non limitatif.
La compréhension de cette description sera facilitée en se référant au dessin joint en annexe, dans lequel la figure unique est une représentation schématisée d'un activimètre conforme à la présente invention.

L'activimètre illustré sur la figure annexée comprend une chambre d'ionisation 1 à puits constituée d'une double enceinte cylindrique renfermant un gaz radiosensible 2. Dans la double enceinte, on remarque la présence d'électrodes 1' permettant de recueillir le courant produit. A l'intérieur du puits de la chambre 1, le radio-isotope 3 dont on désire mesurer l'activité est positionné dans une zone d'isosensibilité. Le radio-isotope 3 est disposé dans un conteneur radiotransparent 4 qui le maintient dans la zone d'isosensibilité par un moyen de support ajustable 5. Ce radio-isotope 3 peut se présenter soit sous forme liquide, et dans ce cas il est contenu dans un flacon (comme illustré sur la figure annexée) ou dans une seringue, soit sous forme solide, et dans ce cas il peut être intégré dans une gélule de type pharmacie ingérable par le patient.

La chambre d'ionisation 1 est entourée par un blindage 6 en matériau radio-atténuateur (par exemple du plomb). Ce blindage 6 est destiné à protéger, d'une part, les opérateurs contre les rayonnements émis par la source radioactive 3 expérimentée, et, d'autre part, la chambre 1 elle-même contre la possible radioactivité ambiante susceptible de fausser les mesures d'activité.

La chambre d'ionisation 1 avec ses accessoires est ici représentée de manière schématique, ses structure, forme et dimensions pouvant être variables selon les produits disponibles sur le marché.

Cette chambre d'ionisation 1 est reliée par le câble 7 à une unité électronique/informatique 8 assurant un traitement du signal pour fournir une indication de l'activité du radio-isotope 3, en utilisant un facteur ou coefficient d'étalonnage propre au type de radio-isotope expérimenté.

Dans le cadre des activimètres traditionnels, ce coefficient d'étalonnage est défini à partir d'une sélection manuelle du type de radio-isotope placé dans la chambre d'ionisation, parmi une liste de plusieurs radio-isotopes prédéfinis et enregistrés.

Contrairement à cela, le présent activimètre a la possibilité de reconnaître par lui-même le type de l'isotope introduit dans la chambre de mesure, et à partir de cette identification, il a la capacité de choisir de manière automatique le coefficient d'étalonnage approprié au type de l'isotope concerné.

Pour cela, tenant compte du fait que chaque radionucléide est caractérisé par un spectre énergétique qui lui est propre, l'appareillage comporte :
- des moyens pour réaliser une spectrométrie d'énergie de la radiation émise par le radio-isotope 3, et en particulier pour évaluer l'énergie du ou des pics photo-électriques caractéristiques de l'isotope. Ces moyens sont constitués d'au moins un détecteur de rayonnement 10 relié(s) par le câble 11 à des moyens de traitement du signal intégrés dans l'unité électronique 8,
- des moyens pour identifier le radio-isotope 3 par comparaison du spectre analysé avec un échantillonnage ou une bibliothèque préprogrammée ou préenregistrée des spectres caractéristiques des radio-isotopes susceptibles d'être analysés, et
- des moyens pour affecter automatiquement aux moyens de mesure d'activité, le coefficient d'étalonnage approprié.

Le ou les détecteurs 10 sont choisis pour permettre la détermination du spectre d'énergie de la radiation du radio-isotope examiné, selon la gamme d'énergie utilisable pour l'activimètre.

Les détecteurs correspondants utilisables peuvent être, soit des détecteurs à scintillation (par exemple NaI, CsI, KI, ZnO ...) couplés à des photodiodes ou photomultiplicateurs, soit des détecteurs à semi-conducteur (par exemple CdTe, CdZnTe...) ; ils sont choisis en fonction des gammes d'activité à mesurer et des spectres d'énergie à identifier.

L'efficacité de ces détecteurs est bien souvent limitée à des gammes réduites d'énergie. Un seul détecteur peut être utilisé si on travaille sur une gamme réduite d'énergie ; en revanche pour une gamme d'énergie étendue, il convient d'utiliser une pluralité de détecteurs différents, choisis selon les caractéristiques de chacun, de manière à permettre une meilleure couverture de la gamme d'énergie envisagée.

Le ou les détecteurs 10 sont disposés de telle façon que leur surface photosensible soit directement frappée par le flux d'énergie primaire provenant du radio-isotope 3 introduit dans la chambre d'ionisation 1.

De préférence, ce ou ces détecteurs 10 sont placés à l'intérieur de la chambre d'ionisation 1. On peut envisager de le ou de les fixer sur la paroi interne de la chambre d'ionisation ou de les insérer dans cette paroi, mais encore de manière préférée et pour des raisons pratiques, il est ou ils sont positionné(s) dans le fond de la chambre, comme représenté sur la figure annexée.

Si besoin est, le socle support 5 du conteneur 4 de radio-isotope comporte quelques adaptations en forme de zone(s) radio-transparente(s) (ouverture(s) ou matériau approprié) de manière à ne pas perturber la transmission du flux d'énergie depuis le radio-isotope 3 jusqu'à la surface photosensible du ou des détecteurs 10. A cet effet, sur la figure annexée, on remarque la présence d'une ouverture 12 aménagée dans le fond du socle support 5.

D'une manière générale, la qualité des données transmises par les détecteurs 10 peut être affectée par les fortes activités du radio-isotope 3. Pour certaines structures de détecteurs, et/ou pour certaines applications, de manière à optimiser le fonctionnement, il peut être intéressant de limiter le flux du rayonnement primaire qui vient frapper la surface photosensible du détecteur. Ces moyens de limitation du flux peuvent se présenter sous la forme d'un diaphragme 13, soit à ouverture variable, soit à ouverture fixe, selon le cas.

Dans le cas où on dispose de plusieurs détecteurs de rayonnement 10, tous les détecteurs en présence reçoivent le rayonnement de l'isotope et permettent l'obtention d'un spectre d'énergie plus ou moins bien résolu. Les moyens de traitement électronique sont alors adaptés pour comparer tous les spectres obtenus avec la bibliothèque de spectres préenregistrés, de manière à permettre l'identification de l'isotope en cours d'analyse. Le cas échéant, plusieurs spectres différents d'un même radio-isotope, fonction de l'activité de celui-ci, peuvent être préenregistrés pour augmenter les possibilités d'identification.

L'unité électronique/informatique 8 est correctement structurée et programmée pour remplir les fonctions définies ci-dessus.
De manière plus détaillée, et telle qu'illustrée sur la figure annexée, cette unité 8 peut comporter plusieurs modules spécifiques soit : un module général de gestion 14, un module entrées/sorties (E/S) 15 dédié au traitement du signal provenant de la chambre d'ionisation 1, un module entrées/sorties (E/S) 16 dédié au traitement du signal provenant du ou des détecteurs 10, et un module interface homme-machine (IHM) 17.

Le module général 14 comprend avantageusement une unité centrale de process « CPU » et des mémoires associées. Il est chargé de gérer les tâches générales et assure le pilotage de l'ensemble de l'installation. Pour un service ou un cabinet de médecine nucléaire, ce module peut permettre de façon générale la préparation et la gestion des examens médicaux, la sauvegarde des résultats sur fichier, l'approvisionnement et la préparation des doses à administrer, la gestion des produits radio-pharmaceutiques...

Le module E/S 15 traite le signal provenant de la chambre d'ionisation 1 par le câble 7. Lorsque le gaz radiosensible 2 est soumis au rayonnement du radio-isotope 3, la chambre d'ionisation 1 fournit au module E/S 15 un courant proportionnel à l'activité dudit radio-isotope. Une électronique de commande et de traitement 151 adaptée convertit ce courant en tension, traite le signal et fournit une indication en curie ou en becquerel de la mesure de l'activité du radio-isotope 3. Pour ce faire, l'électronique de commande et de traitement utilise le coefficient d'étalonnage propre au radio-isotope 3, déterminé par le module E/S 16.

Le module E/S 16 dédié à la spectrométrie est renseigné par le ou les détecteurs 10 par l'intermédiaire du ou des câbles 11. Il comprend une électronique de commande et de traitement 161 apte à définir le ou les pics photo-électriques caractéristiques du radio-isotope 3 ; il englobe des moyens de comparaison automatique 162 entre le spectre énergétique mesuré et le contenu d'une bibliothèque 163 de spectres radio-isotopiques préenregistrés correspondants aux différents isotopes que le dispositif est susceptible de caractériser, ces moyens de comparaison permettant de déboucher sur une identification du radio-isotope concerné. Il englobe également des moyens 164 d'affectation automatique au module 15, du coefficient d'étalonnage correspondant au radio-isotope concerné, afin d'obtenir la mesure d'activité adéquate.

L'interface homme-machine 17 permet de renseigner et/ou d'alerter l'opérateur. Il lui permet aussi de lancer des programmes et de renseigner le dispositif. Cette IHM 17 comporte un écran 171 permettant de visualiser des informations générales ou propres au radio-isotope 3 objet des mesures en cours, ainsi que des messages d'alerte et/ou d'erreur ; elle comporte également un clavier 172 permettant de lancer des programmes et de répondre à des interrogations, ainsi qu'éventuellement une boîte à boutons 173 et des moyens d'alerte 174 du type alarme sonore et/ou lumineuse.

Pour ce qui concerne les problèmes de reconnaissance ou de détermination du radio-isotope en présence, la programmation du module 16 est adaptée pour admettre quelques légères différences entre le spectre mesuré et le spectre préenregistré correspondant, cette différence étant tout de même adaptée pour avoir une certitude de reconnaissance sans faille.
Dans le cas où le ou les spectre(s) analysé(s) par l'appareil ne correspond(ent) pas à l'un quelconque des spectres pré-enregistrés, ou bien si le ou les spectres analysés sont insuffisamment résolus, l'IHM 17 va déclencher un message d'information ou mettre en oeuvre les moyens d'alerte 174, et la mesure d'activité ne pourra être réalisée qu'après une sélection ou identification manuelle du radio-isotope, par l'intermédiaire de la boîte à boutons 173 ou du clavier 172.

On notera que le module de traitement du courant émis par la chambre d'ionisation 1 peut se positionner directement sous la chambre elle-même, ceci pour éviter de transporter les courants très faibles correspondants sur des distances assez longues (quelques décimètres, voire quelques mètres), ce qui pourrait être une cause de bruit.
D'autre part, le spectre d'énergie analysé par le ou les détecteurs 10 peut être perturbé par le conditionnement des sources. En conséquence, l'identification des isotopes tient avantageusement compte de leur conditionnement (par exemple, l'activimètre devra distinguer Tc 99^{m} flacon, Tc 99^{m} seringue, ainsi que Tc 99^{m} gélule, et trois spectres différents correspondants à ces trois configurations devront être préenregistrés).

## Revendications

1. Procédé pour mesurer l'activité d'un radio-isotope, lequel procédé consiste à placer ledit radio-isotope (3) dans une chambre d'ionisation (1) apte à fournir un courant proportionnel à l'activité dudit radio-isotope expérimenté, puis, par des moyens électroniques de traitement du signal (15), à convertir la valeur du courant en valeur d'activité, en utilisant un coefficient d'étalonnage correspondant au radio-isotope en présence, **caractérisé en ce qu'**il consiste :
- à déterminer le spectre d'énergie de la radiation émise par le radio-isotope (3) placé dans la chambre d'ionisation (1),
- à comparer automatiquement ce spectre d'énergie avec un ensemble de spectres d'énergie de radio-isotopes préenregistrés ou préprogrammés, de manière à identifier le radio-isotope en présence, puis
- à affecter automatiquement aux moyens électroniques de traitement du signal (15), le coefficient d'étalonnage correspondant audit radio-isotope en présence, pour obtenir la mesure d'activité adéquate.

2. Procédé selon la revendication 1, **caractérisé en ce qu'**il consiste, lorsque le spectre mesuré du radio-isotope (3) en cours d'analyse ne correspond pas à l'un quelconque des spectres préenregistrés ou préprogrammés, à activer automatiquement une alarme visuelle et/ou sonore, de manière à ne pouvoir délivrer la valeur d'activité recherchée qu'après une programmation et/ou une sélection manuelle du radio-isotope en présence.

3. Appareil pour mesurer l'activité d'un radio-isotope, lequel appareil comprend une chambre d'ionisation (1) reliée à des moyens électroniques de commande et de traitement du signal (15) fournissant une indication de l'activité introduite dans ladite chambre (1), en utilisant un coefficient d'étalonnage correspondant au radio-isotope en présence (3), **caractérisé en ce qu'**il comprend :
- des moyens d'analyse (10, 11, 161) du spectre d'énergie du radio-isotope concerné (3),
- des moyens (162) pour comparer automatiquement le spectre d'énergie analysé avec un ensemble de spectres préenregistrés ou préprogrammés (163) de manière à identifier le radio-isotope en présence, et
- des moyens (164) pour affecter automatiquement auxdits moyens électroniques de traitement du signal (15), le coefficient d'étalonnage correspondant audit radio-isotope en présence, pour obtenir la mesure d'activité adéquate.

4. Appareil selon la revendication 3, **caractérisé en ce que** les moyens d'analyse du spectre d'énergie du radio-isotope (3) sont constitués d'au moins un détecteur (10) du type à scintillation ou à semi-conducteur, associé(s) à des moyens électroniques et informatiques de traitement du signal (161), la surface photosensible dudit ou desdits détecteurs (10) étant placée dans le flux du rayonnement primaire émis par le radio-isotope (3) placé dans la chambre d'ionisation (1).

5. Appareil selon la revendication 4, **caractérisé en ce qu'**il comporte au moins un détecteur (10) permettant un mesurage du spectre d'énergie de radio-isotopes, associé à des moyens (13) qui permettent de limiter le flux du rayonnement primaire émis par le radio-isotope qui vient frapper sa surface photosensible, pour limiter la radiation reçue par ledit détecteur (10) et améliorer les conditions d'analyse du spectre du radio-isotope en présence.

6. Appareil selon la revendication 5, **caractérisé en ce qu'**il comporte au moins un détecteur (10) permettant un mesurage du spectre d'énergie de radio-isotopes, associé à un diaphragme (13) à ouverture variable.

7. Appareil selon la revendication 5, **caractérisé en ce qu'**il comporte au moins un détecteur (10) permettant un mesurage du spectre d'énergie de radio-isotopes, associé à un diaphragme (13) à ouverture fixe.

8. Appareil selon l'une quelconque des revendications 3 à 7, **caractérisé en ce qu'**il comporte une pluralité de détecteurs différents (10) permettant un mesurage du spectre d'énergie de radio-isotopes, de manière à augmenter les possibilités d'identification des radio-isotopes analysés.

9. Appareil selon l'une quelconque des revendications 3 à 8, **caractérisé en ce qu'**il comporte au moins un détecteur (10) permettant un mesurage du spectre d'énergie de radio-isotopes, placé dans le fond de la chambre d'ionisation (1), le support (5) du conteneur (4) de radio-isotope (3) étant muni d'un fond au moins en partie radio-transparent, de manière à ce que le flux du rayonnement primaire émis par le radio-isotope ait la possibilité de venir frapper la surface photosensible dudit ou desdits détecteurs (10).

10. Appareil selon l'une quelconque des revendications 4 à 9, **caractérisé en ce qu'**il comporte des moyens d'information ou d'alerte (171, 174) activés dans le cas où le spectre analysé du radio-isotope en présence ne correspond pas à l'un quelconque des spectres préenregistrés ou préprogrammés, et des moyens (172, 173) pour permettre la sélection manuelle du radio-isotope en présence.

## Claims

1. A method for measuring the activity of a radio-isotope, which method consists in placing said radio-isotope (3) in an ionization chamber (1) capable of providing a current proportional to the activity of said radio-isotope tested, then, using electronic means for processing the signal (15), in converting the value of the current into an activity value, by using a calibration coefficient corresponding to the radio-isotope at hand, **characterized in that** it consists:
- in determining the energy spectrum of the radiation emitted by the radioisotope (3) placed in the ionization chamber (1),
- in comparing automatically this energy spectrum with a set of pre-recorded or pre-programmed radio-isotopes energy spectra, in order to identify the radioisotope at hand, then
- in allocating automatically to the electronic means for processing the signal (15), the calibration coefficient corresponding to said radio-isotope at hand, to obtain the adequate activity measurement.

2. A method according to claim 1, **characterized in that** it consists, when the measured spectrum of the radio-isotope (3) under analysis does not correspond to any of the pre-recorded or pre-programmed spectra, in activating automatically a visual and/or sound alarm, in order to provide the activity value sought only after manual programming and/or selection of the radio-isotope at hand.

3. An instrument for measuring the activity of a radio-isotope, which instrument comprises an ionization chamber (1) connected to electronic means for controlling and processing the signal (15) providing an indication of the activity introduced into said chamber (1), by using a calibration coefficient corresponding to the radio-isotope at hand (3), **characterized in that** it comprises :
- means (10, 11,161) for analyzing the energy spectrum of the radio-isotope
affected (3),
- means (162) for comparing automatically the energy spectrum analyzed with a
set of pre-recorded or pre-programmed spectra (163) in order to identify the radio-isotope at hand, and
- means (164) for allocating automatically to said electronic means for processing the signal (15), the calibration coefficient corresponding to said radio-isotope at hand, to obtain the adequate activity measurement.

4. An instrument according to claim 3, **characterized in that** the means for analyzing the energy spectrum of the radio-isotope (3) are formed of at least one detector (10) of the scintillation or semi-conductor type, associated with electronic and computerized means for processing the signal (161), the photosensitive surface of said detectors (10) being placed in the flux of the primary radiation emitted by the radio-isotope (3) placed in the ionization chamber (1).

5. An instrument according to claim 4, **characterized in that** it includes at least one detector (10) enabling measurement of the energy spectrum of radioisotopes, associated with means (13) which enable to limit the flux of the primary radiation emitted by the radio-isotope which strikes its photosensitive surface, to limit the radiation received by said detector (10) and improve the
analysis conditions of the spectrum of the radio-isotope at hand.

6. An instrument according to claim 5, **characterized in that** it includes at least one detector (10) enabling measurement of the energy spectrum of radioisotopes, associated with a variable aperture diaphragm (13).

7. An instrument according to claim 5, **characterized in that** it includes at least one detector (10) enabling measurement of the energy spectrum of radioisotopes, associated with a fixed aperture diaphragm (13).

8. An instrument according to any of the claims 3 to 7, **characterized in that** it includes a plurality of different detectors (10) enabling measurement of the energy spectrum of radio-isotopes, in order to increase the possibilities of identification of the radio-isotopes analyzed.

9. An instrument according to any of the claims 3 to 8, **characterized in that** it includes at least one detector (10) enabling measurement of the energy spectrum of radio-isotopes, placed at the bottom of the ionization chamber (1), the support (5) of the container (4) of radio-isotope (3) being fitted with a bottom at least partially radio-transparent, so that flux of the primary radiation emitted by the radio-isotope may strike the photosensitive surface of said detector(s) (10).

10. An instrument according to any of the claims 4 to 9, **characterized in that** it includes information or alert means (171, 174) activated in case when the spectrum analyzed of the radio-isotope at hand does not correspond to any of the pre-recorded or pre-programmed spectra, and means (172, 173) to enable manual selection of the radio-isotope at hand.

## Patentansprüche

1. Verfahren zur Messung der Aktivität eines Radioisotops, wobei das Verfahren darin besteht, das Radioisotop (3) in einer Ionisierkammer (1) anzuordnen, die einen Strom proportional zur Aktivität des untersuchten Radioisotops liefern kann, dann durch elektronische Bearbeitungsmittel des Signals (15) den Wert des Stroms in einen Aktivitätswert zu konvertieren, wobei ein Eichungskoeffizient verwendet wird, der dem vorliegenden Radioisotop entspricht, **dadurch gekennzeichnet, dass** es darin besteht:
- das Energiespektrum der Strahlung zu bestimmen, die von dem Radioisotop (3), das in der Ionisierkammer (1) angeordnet ist, ausgesandt wird,
- automatisch dieses Energiespektrum mit einer Gesamtheit von Energiespektren von Radioisotopen, die voraufgezeichnet oder vorprogrammiert wurden, zu vergleichen, um das vorliegende Radioisotop zu identifizieren, dann
- automatisch den elektronischen Bearbeitungsmitteln des Signals (15) den Eichungskoeffizient zuzuordnen, der dem vorliegenden Radioisotop entspricht, um die adäquate Aktivitätsmessung zu erhalten.

2. Verfahren nach Anspruch 1, **dadurch gekennzeichnet, dass** es, wenn das gemessene Spektrum des Radioisotops (3) während der Analyse nicht einem der voraufgezeichneten oder vorprogrammierten Spektren entspricht, darin besteht, automatisch einen visuellen und/oder akustischen Alarm zu aktivieren, so dass der gewünschte Aktivitätswert erst nach einer manuellen Programmierung und/oder Auswahl des vorliegenden Radioisotops geliefert werden kann.

3. Gerät zur Messung der Aktivität eines Radioisotops, wobei das Gerät eine Ionisierkammer (1) umfasst, die mit elektronischen Mitteln zur Steuerung und Bearbeitung des Signals (15) verbunden ist, die eine Angabe zu der in die Kammer (1) eingeleiteten Aktivität liefern, wobei ein Eichungskoeffizient verwendet wird, der dem vorliegenden Radioisotop (3) entspricht, **dadurch gekennzeichnet, dass** es umfasst:
- Mittel (10, 11, 161) zur Analyse des Energiespektrums des betreffenden Radioisotops (3),
- Mittel (162), um automatisch das analysierte Energiespektrum mit einer Gesamtheit von voraufgezeichneten oder vorprogrammierten Spektren (163) zu vergleichen, um das vorliegende Radioisotop zu identifizieren, und
- Mittel (164), um automatisch den elektronischen Bearbeitungsmitteln des Signals (15) den Eichungskoeffizient zuzuordnen, der dem vorliegenden Radioisotop entspricht, um die adäquate Aktivitätsmessung zu erhalten.

4. Gerät nach Anspruch 3, **dadurch gekennzeichnet, dass** die Mittel zur Analyse des Energiespektrums des Radioisotops (3) von mindestens einem Detektor (10) des Typs mit Szintillation oder Halbleiter gebildet sind, die mit elektronischen und informatischen Mitteln zur Bearbeitung des Signals (161) verbunden sind, wobei die photosensible Oberfläche des oder der Detektors(en) (10) in dem Strom der Primärstrahlung angeordnet ist, die von dem Radioisotop (3) ausgesandt wird, das in der Ionisierkammer (1) angeordnet ist.

5. Gerät nach Anspruch 4, **dadurch gekennzeichnet, dass** es mindestens einen Detektor (10) umfasst, der eine Messung des Energiespektrums von Radioisotopen ermöglicht und mit Mitteln (13) verbunden ist, die es ermöglichen, den Strom der Primärstrahlung, die von dem Radioisotop ausgesandt wird und auf seine photosensible Schicht trifft, zu begrenzen, um die von dem Detektor (10) empfangene Strahlung zu begrenzen und die Analysebedingungen des Spektrums des vorliegenden Radioisotops zu verbessern.

6. Gerät nach Anspruch 5, **dadurch gekennzeichnet, dass** es mindestens einen Detektor (10) umfasst, der eine Messung des Energiespektrums von Radioisotopen ermöglicht und mit einer Membran (13) mit variabler Öffnung verbunden ist.

7. Gerät nach Anspruch 5, **dadurch gekennzeichnet, dass** es mindestens einen Detektor (10) umfasst, der eine Messung des Energiespektrums von Radioisotopen ermöglicht und mit einer Membran (13) mit fixer Öffnung verbunden ist.

8. Gerät nach einem der Ansprüche 3 bis 7, **dadurch gekennzeichnet, dass** es eine Vielzahl unterschiedlicher Detektoren (10) umfasst, die eine Messung des Energiespektrums von Radioisotopen ermöglichen, um die Möglichkeiten zur Identifikation der analysierten Radioisotope zu erhöhen.

9. Gerät nach einem der Ansprüche 3 bis 8, **dadurch gekennzeichnet, dass** es mindestens einen Detektor (10) umfasst, der eine Messung des Energiespektrums von Radioisotopen ermöglicht und am Boden der Ionisierkammer (1) angeordnet ist, wobei die Stütze (5) des Behälters (4) eines Radioisotops (3) mit einem zumindest teilweise radiotransparenten Boden versehen ist, so dass der Strom der von dem Radioisotop entsandten Primärstrahlung die Möglichkeit hat, auf die photosensible Schicht des oder der Detektors(en) (10) zu treffen.

10. Gerät nach einem der Ansprüche 4 bis 9, **dadurch gekennzeichnet, dass** es Informations- oder Warnhilfsmittel (171, 174), die aktiviert werden, wenn das analysierte Spektrum des vorliegenden Radioisotops nicht einem der voraufgezeichneten oder vorprogrammierten Spektren entspricht, und Mittel (172, 173) umfasst, um die manuelle Auswahl des vorliegenden Radioisotops zu ermöglichen.
